# EUROPÄISCHE PATENTSCHRIFT

(11) **EP 2 040 966 B1**
(45) Veröffentlichungstag und Bekanntmachung des Hinweises auf die Patenterteilung: **09.03.2011**
(21) Anmeldenummer: 07728988.2
(22) Anmeldetag: 10.05.2007
(51) Int. Cl.: B60T 11/26, B65D 51/16, B60T 8/48

(54) **BEHÄLTER MIT EINEM DICHTELEMENT**
CONTAINER COMPRISING A SEALING ELEMENT
RÉCIPIENT MUNI D'UN ÉLÉMENT D'ÉTANCHÉITÉ

(30) Priorität: 11.07.2006 DE 102006031931; 29.09.2006 DE 102006046479
(43) Veröffentlichungstag der Anmeldung: 01.04.2009
(73) Patentinhaber: Continental Teves AG & Co. oHG, 60488 Frankfurt (DE)
(72) Erfinder: NEUMANN, Hans-Jürgen, 65428 Rüsselsheim (DE); SCHLICHT, Stephan, 64569 Nauheim (DE); SCHIEL, Christoph, 61231 Bad Nauheim (DE)
(86) Internationale Anmeldenummer: PCT/EP2007/054536
(87) Internationale Veröffentlichungsnummer: WO 2008/006632

(56) Entgegenhaltungen:
- DE-A1- 3 728 542
- DE-A1- 3 734 421
- JP-A- 11 227 594
- US-A1- 2002 056 695
- US-B1- 6 360 540

## Beschreibung

Die Erfindung betrifft einen Behälter, insbesondere einen Druckmittelbehälter für hydraulische Kraftfahrzeugbremsanlagen, mit mindestens einer Kammer, welche über einen Einfüllstutzen mit einem flüssigen Medium befüllbar ist, und einem Deckel, welcher an dem Einfüllstutzen befestigbar ist und Mittel zum Druckausgleich zwischen der Kammer und der Atmosphäre aufweist, wobei ein Dichtelement gegen Herausdringen des flüssigen Mediums aus der Kammer vorgesehen ist, wobei das Dichtelement einen mit der Atmosphäre verbundenen Raum aufweist, welcher eine oder mehrere der Kammer zugewandte Öffnungen aufweist, wobei der Raum derart ausgestaltet ist, dass in den Raum eindringendes flüssiges Medium bei Verschiebung mittels eines weiteren, gasförmigen Mediums unter Beibehaltung des Volumens eine Vergrößerung der Oberfläche erfährt und das flüssige Medium bei Erreichen einer Grenzoberflächenspannung in die Kammer zurückgedrängt wird, so dass das gasförmige Medium über das Dichtelement in die Atmosphäre strömen kann, und wobei der Raum die Form eines Trichters aufweist, dessen erstens, verengtes Ende sich in Richtung Kammer erstreckt, an welchem die Öffnungen vorgesehen sind.

Allgemein bekannt sind aus allen technischen Gebieten Behälter mit aktiven Dichtelementen, wie beispielsweise Ventile oder Membrane, oder mit passiven Dichtelementen, wie beispielsweise Labyrinthe, welche meist auf Schwerkraftbasis funktionieren.

Ein Behälter, welcher als Druckmittelbehälter für eine hydraulische Fahrzeugbremsanlage vorgesehen ist, ist beispielsweise aus der DE 37 34 421 A1 bekannt. Dessen Dichtelement besteht aus mehreren Bauteilen, welche der Abdichtung der Druckmittelkammer dienen und gleichzeitig einen Druckausgleich ermöglichen. Für die Funktion eines derartigen Behälters ist es notwendig, dass die Kammer, in welcher sich das flüssige Medium, hier die Bremsflüssigkeit als Druckmittel, befindet, drucklos ist. D.h. ein Druckausgleich zwischen der Kammer und der Atmosphäre kann stattfinden. So wird während eines Bremsvorgangs der Behälter kurzzeitig je einmal be- und entlüftet, wobei diese diskontinuierlichen Strömungen bei ausreichender Abdichtung zu gewährleisten sind. Weiter müssen Volumenänderungen des Druckmittels, welche beispielsweise durch Druckmittelverlust oder Temperaturänderungen des Druckmittels auftreten können, durch einen Luftaustausch ausgeglichen werden können.

Bei der Verwendung des Behälters in einer Bremsanlage mit Fahrdynamikregelung, wie z.B. ESP, kann es bei einem RegelEingriff notwendig sein, bei unbetätigtem oder betätigtem Hauptzylinder der Bremsanlage Druckmittel aus dem Behälter in Richtung Radbremsen nachzusaugen, was mittels einer Druckmittelfördereinrichtung erfolgt, deren Eingang wahlweise mit Druckräumen des Hauptzylinders oder mit den Radbremsen verbindbar ist, um in Richtung Radbremsen oder in Richtung Hauptzylinder zu fördern.

Gleichzeitig ist jedoch zu verhindern, dass Druckmittel aus dem Druckmittelbehälter - beispielsweise bei Schräglage des Kraftfahrzeuges - herausdringen kann. So ist der DE 37 34 421 A1 ein Ausführungsbeispiel zu entnehmen, bei welchem eine Dichtung zwischen dem Einfüllstutzen und dem Deckel angeordnet und in einer Füllöffnung des Einfüllstützens ein Trennelement vorgesehen ist, welches zwar luftdurchlässig aber flüssigkeitsdicht ausgebildet ist, wobei das Tennelement unverlierbar mit dem Deckel verbunden ist.

Weiter ist aus der DE 10 2005 009 657 A1 ein Behälter mit einem Labyrinth bekannt.

Als nachteilig wird bei den vorstehend genannten Behältern der aufwendige Aufbau und die zeit- und kostenaufwendige Montage angesehen. Ferner finden bei bekannten Behältern häufig Bauteile und Dichtelemente Verwendung, welche aus gummiartigen Werkstoffen hergestellt sind oder eine hohe Genauigkeit erfordern, was oft zu kostenintensiven Lösungen führt.

Ein gattungsgemäßer Behälter ist aus der JP 11 227594 A bekannt. Eine Trennwand mit einem Belüftungsventil ist dichtend zwischen dem darin beschriebenen trichterförmigen Dichtungselement und dem Deckel angeordnet.

Aus der US 6,30,540 B1 ist ebenfalls ein trichterförmiges Dichtungselement bekannt. Eine in Richtung der Kammer zugewandte Öffnung ist auf einer Innenseite des Dichtelementes mit einem Material verdeckt, welches nur einen beschränkten Druckmitteldurchfluss erlaubt.

Die Öffnungen der bekannten trichterförmigen Dichtelemente ragen in die Kammer hinein. Hierdurch kann das Druckmittel leicht in die Öffnung hinein gelangen.

Es ist Aufgabe der vorliegenden Erfindung, einen Behälter mit einem Dichtelement bereitzustellen, welcher einfach und kostengünstig herstellbar ist, wobei die Be- und Entlüftung bei ausreichender Abdichtung mit möglichst wenigen Bauteilen gewährleistet sein muss, und bei dem das Herausdringen des flüssigen Mediums aus der Kammer erschwert wird.

Diese Aufgabe wird dadurch gelöst, dass das Dichtelement an einer Außenseite des Trichters einen axial in Richtung Kammer gerichteten, umlaufenden Vorsprung aufweist, welcher das erste mit einer Öffnung versehene Ende des Trichters umgibt und den Trichter überragt.
Die Abdichtung des Behälters erfolgt somit einzig und allein über das Dichtelement, wobei die Kohäsion bzw. die Adhäsion des flüssigen Mediums genutzt wird und eine Dichtwirkung auch bei hochviskosen Medien unter ausreichender Belüftung erzielt werden kann. Weitere Bauteile zur Abdichtung sind nicht notwendig und das Herausdringen des flüssigen Mediums aus der Kammer wird durch den umlaufenden Vorsprung erschwert.

Eine einfache Verbindung zwischen Deckel und Dichtelement wird dadurch erzielt, dass das Dichtelement einen radial nach innen gerichteten Vorsprung aufweist, mittels welchem das Dichtelement an dem Deckel befestigbar ist. Auf diese Weise kann das Dichtelement einfach und schnell in dem Deckel befestigt werden. Dabei ist ebenso von Vorteil, dass der Deckel und das Dichtelement eine vormontierbare Einheit bilden können.

Gemäß einer vorteilhaften Weiterbildung der Erfindung, ist der radial nach innen gerichtete Vorsprung des Dichtelementes an einem zweiten Ende des Trichters vorgesehen. Dadurch kann ein großer Öffnungswinkel des Trichters vorgesehen werden und es ergibt sich eine flache Ausgestaltung des Dichtelementes.

Um die Be- und Entlüftung des Behälters bei extremen Schräglagen des Behälters zu verbessern, weist das Dichtelement im Bereich des Trichters weitere Öffnungen auf, welche außerhalb des axialen Vorsprunges vorgesehen und gleichmäßig verteilt am Umfang des Trichters angeordnet sind. Dadurch ist sichergestellt, dass der Luftaustausch stets über eine der Öffnungen des Dichtelementes erfolgen kann.

Eine einfache Positionierung des Dichtelementes am Einfüllstutzen wird erreicht, indem an das Dichtelement eine oder mehrere konzentrisch umlaufende Dichtlippen zur Abdichtung des Einfüllstutzens angeformt sind.

Ein erfindungsgemäßes Verfahren zur Be- und Entlüftung eines Behälters umfassend einen Deckel und ein Dichtelement, wobei der Behälter in wenigstens einer Kammer ein flüssiges Medium bevorratet, sieht vor, dass das Medium, welches in das Dichtelement eindringt, durch ein weiteres, gasförmiges Medium verschoben wird, und dass sich bei Verschiebung des flüssigen Mediums unter Beibehaltung des Volumens die Oberfläche des Mediums vergrößert, wobei das Medium bei Erreichen einer Grenzoberflächenspannung in die Kammer zurückgedrängt wird und das gasförmige Medium über das Dichtelement in die Atmosphäre strömen kann.

Weitere Einzelheiten, Merkmale und Vorteile der Erfindung gehen aus der nachfolgenden Beschreibung von zwei Ausführungsbeispielen unter Bezugnahme auf die beiliegende schematische Zeichnung hervor. In der Zeichnung zeigen:
- Figur 1: den Aufbau einer bekannten elektrohydraulischen Bremsanlage mit Fahrdynamikregelung;
- Figur 2: einen Ausschnitt eines nicht beanspruchten Ausführungsbeispiels eines Behälters im Längsschnitt;
- Figur 3: eine Funktionsskizze des Dichtelementes;
- Figur 4: ein Dichtelement eines ersten Ausführungsbeispiels eines erfindungsgemäßen Behälters im Längsschnitt;
- Figur 5: einen Ausschnitt eines zweiten Ausführungsbeispiels eines erfindungsgemäßen Behälters im Längsschnitt und
- Figur 6: das Dichtelement des zweiten Ausführungsbeispiel in einer Draufsicht.

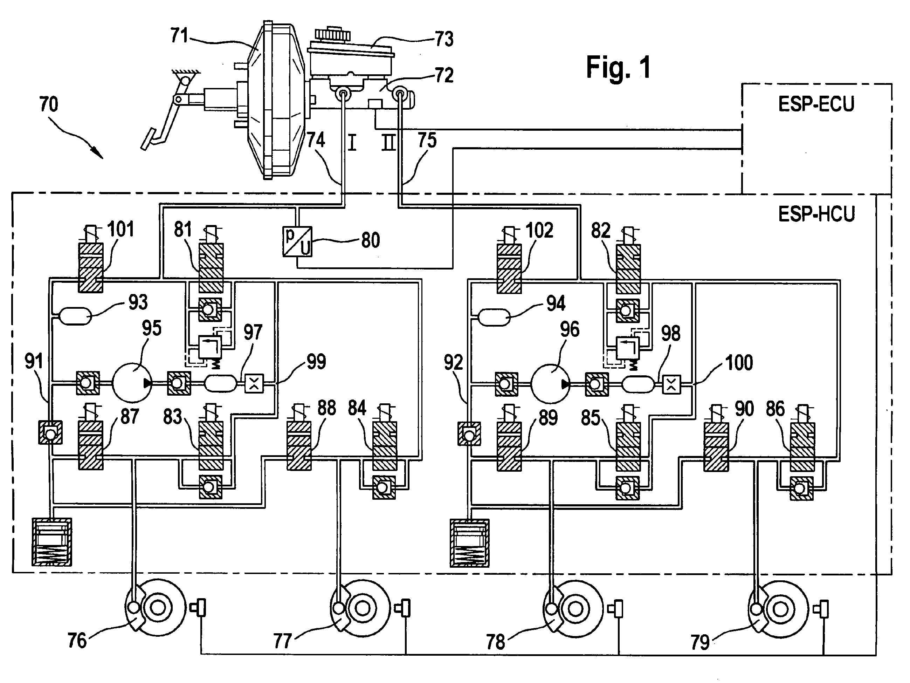

Die Fig. 1 dient zur Erläuterung einer an sich bekannten elektrohydraulischen Bremsanlage 70, die hier beispielhaft mit dem Fahrdynamikregelsystem ESP ausgestattet ist und in welcher ein erfindungsgemäßer Behälter der nachfolgenden Ausführungsbeispiele Verwendung finden kann.

Grundsätzlich ist die Anwendung des erfindungsgemäßen Prinzips jedoch nicht auf eine Fahrzeugbremsanlage bzw. allgemein den Automobilbau begrenzt. Denkbar ist die Verwendung eines erfindungsgemäßen Behälters in jedem technischen Gebiet, in welchem der Einsatz eines druckausgeglichenen Behälters mit einem flüssigen Medium notwendig ist.

Die Bremsanlage 70 umfasst ein Bremsgerät mit einem pneumatischen Bremskraftverstärker 71, einen pedalbetätigbaren Hauptzylinder 72 mit einem drucklosen Druckmittelbehälter 73, wobei nicht dargestellte Druckräume des Hauptzylinders 72 über Bremsleitungen 74,75 mit Radbremsen 76-79 verbunden sind. Die Radbremsen 76-79 sind paarweise in so genannten Bremskreisen I, II zusammengefasst. Bei den Bremskreisen I, II hat sich die so genannte Diagonalaufteilung unter Zusammenfassung von diagonal gegenüberliegenden Radbremsen der Vorderachse und Hinterachse eines Fahrzeugs durchgesetzt, wobei prinzipiell auch andere Aufteilung wie beispielsweise die sogenannte Schwarz/Weiß Aufteilung unter paarweiser Kombination der Radbremsen einer Achse möglich ist.

Zur Erfassung eines fahrerseitig eingesteuerten Drucks dient ein Drucksensor 80 an der Bremsleitung 74, welche eine Druckkammer des Hauptzylinder 72 mit den Radbremsen 76,77 von Bremskreis I verbindet. Jede Bremsleitung 74,75 weist in Reihenschaltung elektromagnetische Trennventile 81,82 sowie für jede Radbremse 76-79 jeweils ein Einlassventil 83-86 sowie jeweils ein Auslassventil 87-90 auf. Die beiden Radbremsen 76,77;78,79 eines jeden Bremskreises I, II sind mit einer Rücklaufleitung 91,92 verbunden, in deren Leitungsabzweige pro Radbremse 76-79 jeweils das Auslassventil 87-90 eingesetzt ist. Stromabwärts zu den Auslassventilen 87-90 befindet sich in jeder Rücklaufleitung 91,92 ein Niederdruckspeicher 93,94 der mit einem Eingang einer elektromotorisch angetriebenen Druckmittelfördereinrichtung 95,96 verbunden ist, welche beispielsweise als Pumpe ausgestaltet ist und welche die beiden Bremskreise I,II speist. Zwischen einem Ausgang jeder Druckmittelfördereinrichtung 95,96 und dem zugehörigen Bremskreis I, II besteht mittels Druckkanal 97,98 und einem Abzweig 99,100 eine hydraulische Verbindung, wobei die Druckerhöhung in den Radbremsen 76-79 über die Einlassventile 83-86 regelbar ist. Dadurch ist über die Druckmittelfördereinrichtungen 95,96 Druck zwecks Fahrstabilitätseingriffe oder zum Bremsen in den Radbremsen 76-79 einsteuerbar, ohne auf einen zentralen Hochdruckspeicher wie bei elektrohydraulischen Bremsanlagen zurückgreifen zu müssen. Um einen Wechsel zwischen ABS-Rückförderbetrieb (Förderrichtung in Richtung Hauptbremszylinder 72) und ASR oder ESP-Fahrdynamikregelungsbetrieb (Förderrichtung in Richtung Radbremsen) mittels der Druckmittelfördervorrichtungen 95,96 zu ermöglichen, ist im Ansaugzweig jeder Druckmittelfördereinrichtung 95,96 jeweils ein Umschaltventil 101,102 integriert, welches bei aktiver Fahrdynamikregelung eine Druckmittelverbindung zwischen dem Hauptzylinder 72 und dem Eingang der Druckmittelfördereinrichtungen 95,96 herzustellen vermag.

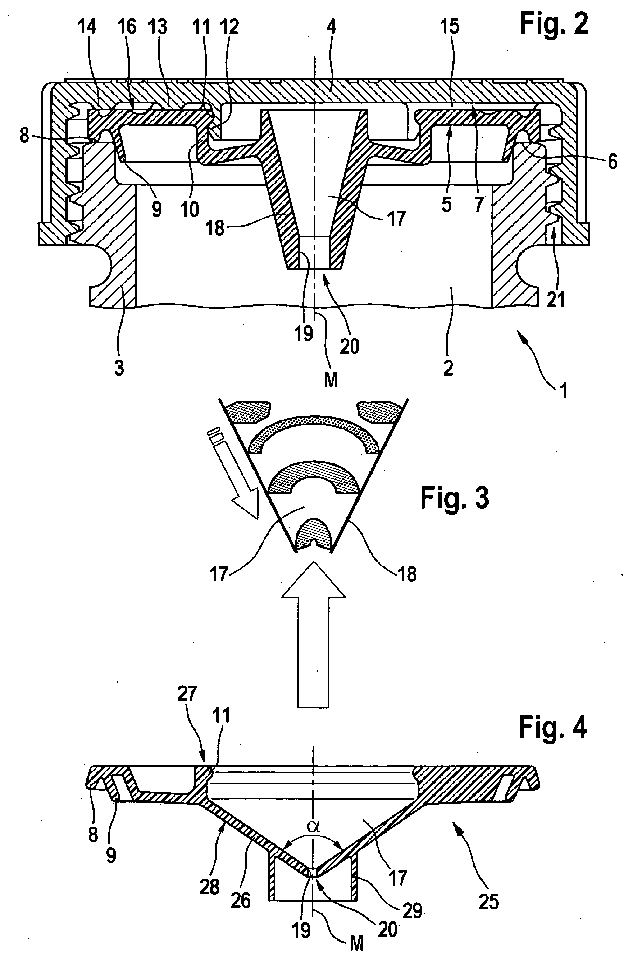

Fig. 2 zeigt einen Ausschnitt eines nicht beanspruchten Ausführungsbeispiels eines Behälters 1 im Längsschnitt, welcher beispielsweise als Druckmittelbehälter 73 in einer gemäß Fig. 1 beschriebenen Bremsanlage mit Fahrdynamikregelung eingesetzt werden kann.

Bei der Verwendung in einer hydraulischen Bremsanlage stellt der Behälter 1 in mindestens einer Kammer 2 Bremsflüssigkeit als Druckmittel für eine Bremsanlage bereit. Wie Fig. 1 zu entnehmen ist, ist der Behälter 1 an dem Hauptzylinder 72 befestigt und mit diesem verbunden. Der Behälter 1 weist einen Einfüllstutzen 3 auf, über welchen der Behälter 1 mit Bremsflüssigkeit befüllbar ist und der mittels eines Deckels 4 verschließbar ist. Der Deckel 4 kann, wie in Fig. 2 dargestellt, über eine Gewindeverbindung oder alternativ über eine Bajonettverbindung an dem Einfüllstutzen 3 befestigt werden.

Für die Funktion des Behälters 1 ist es erforderlich, dass die Kammer 2 drucklos ist. Dies bedeutet, dass ein Druckausgleich zwischen der Kammer 2 und der Atmosphäre stattfinden können muss. So wird während eines Bremsvorgangs der Behälter 1 kurzzeitig je einmal be- und entlüftet. Diese diskontinuierlichen Strömungen sind bei ausreichender Abdichtung zu gewährleisten. Ferner müssen Volumenänderungen des Druckmittels, beispielsweise durch Druckmittelverlust oder Temperaturänderungen des Druckmittels, durch einen Luftaustausch ausgeglichen werden können.

Gleichzeitig ist zu verhindern, dass Druckmittel aus dem Behälter 1, beispielsweise bei Schräglage des Kraftfahrzeuges, herausdringen kann. Dies geschieht mittels eines Dichtelementes 5, das aus Kunststoff vorgesehen ist und welches im nachfolgenden näher beschrieben wird.

Wie ersichtlich ist, ist das Dichtelement 5 im Wesentlichen scheibenförmig ausgebildet. Die Abdichtung der Kammer 2 erfolgt einerseits durch Anlage des Dichtelementes 5 an einem Rand 6 des Einfüllstutzens 3, andererseits durch Anlage des Dichtelementes 5 an einer Innenseite 7 des Deckels 4.

Die Abdichtung am Rand 6 des Einfüllstutzens 3 erfolgt über zwei im Wesentlichen axial ausgerichtete, konzentrisch umlaufende Dichtlippen 8,9 des Dichtelementes 5, welche an dessen äußeren Rand angeformt sind. Die innere Dichtlippe 9 überragt dabei in ihrer Länge die äußere Dichtlippe 8 und ist um einen bestimmten Winkel geneigt zu einer Mittelachse M des Behälters 1 vorgesehen, so dass sie nach Montage des Deckels 4 auf dem Einfüllstutzen 3 bei gleichzeitiger Anlage am Rand 6 des Einfüllstutzens 3 in die Kammer 2 hineinragt. Somit kann eine einfache Positionierung des Dichtelementes 5 auf dem Einfüllstutzen 3 erreicht werden.

Wie aus Fig. 2 hervorgeht, weist der Deckel 4 für die Abdichtung mit dem Dichtelement 5 an seiner Innenseite 7 konzentrisch umlaufende Vorsprünge 13,14 auf, die nach der Montage des Deckels 4 an einer Oberseite 16 des Dichtelementes 5 anliegen und die lediglich von einem weiter unten beschriebenen Luftkanal 15 durchbrochen sind.

Zur Befestigung des Dichtelementes 5 am Deckel 4 weist das Dichtelement 5 an einer axialen Wandung 10 einen radial nach innen gerichteten Vorsprung 11 auf, mittels welchem das Dichtelement 5 an einem entsprechenden radial nach außen gerichteten Vorsprung 12 des Deckels 4 befestigt wird. Dadurch kann das Dichtelement 5 einfach und schnell in den Deckel 4 eingeclipst werden und die beiden Bauteile 4,5 können eine vormontierbare Einheit bilden.

Zur Be- und Entlüftung der Kammer 2 weist das Dichtelement 5 einen mit der Atmosphäre verbundenen Raum 17 auf. Wie aus Fig. 2 ersichtlich ist, ist der Raum 17 durch eine Wandung in Form eines Trichters 18 gebildet, dessen erstes, verengtes Ende 20 sich in Richtung Kammer 2 erstreckt. Am ersten Ende 20 des Trichters 18 ist eine Öffnung 19 vorgesehen, welche den Raum 17 mit der Kammer 2 verbindet. Die Funktion des Raumes 17 wird anhand der Funktionsskizze gemäß Fig. 3 erläutert.

Entsteht beispielsweise durch Rückförderung von Druckmittel in der Kammer 2 ein Überdruck, muss dieser abgebaut werden, d.h. es muss ein Druckausgleich zwischen der Kammer 2 und der Atmosphäre stattfinden. Dabei kann es vorkommen, dass eine geringe Menge des Druckmittels über die Öffnung 19 in den Raum 17 eindringt. Das Druckmittel wird ähnlich einer Blase aufgrund des Überdruckes der in der Kammer 2 befindlichen Luft in dem Raum 17 Richtung Deckel 4 verschoben, wobei das Druckmittel durch Kohäsion und Adhäsion unter Beibehaltung seines Volumens eine Vergrößerung seiner Oberfläche erfährt. Das Druckmittel wird durch den Überdruck weiter in Richtung Deckel 4 verschoben, bis eine Grenzoberflächenspannung des Druckmittels erreicht ist und die Blase aus Druckmittel platzt. Durch Adhäsion und Kapillarwirkung wird das Druckmittel am Trichter 18 entlang in die Kammer 2 zurückgedrängt und die Luft kann über den Raum 17 in die Atmosphäre strömen.

Durch die Erstreckung des Raumes 17 in axialer Richtung bezogen auf die Mittelachse M des Behälters 1 ist eine kostengünstige Herstellung des Behälters 1 ohne ein aufwendiges Spritzwerkzeug möglich. Es ist jedoch ebenso denkbar, dass sich der Raum 17 in radialer Richtung bezogen auf die Mittelachse M erstreckt oder dass dieser eine Kurvenform aufweist, wobei beide Formen eine besonders flache Ausgestaltung des Dichtelementes 5 ermöglichen. Diese Ausgestaltungsmöglichkeiten seien nur beispielhaft genannt, da die Oberflächenerhöhnung längs jedes Weges realisiert werden kann. Das Zurückdrängen des Druckmittels geschieht auch weitgehend unabhängig von Beschleunigungskräften, z.B. der Erdanziehung. Ferner ist von Vorteil, dass das Dichtelement 5 richtungsabhängige Durchflusswiderstände zeigt, so dass das Druckmittel durch die Öffnung 19 leichter in Richtung Kammer 2 als in Richtung Deckel 4 fließen kann.

Der Luftaustausch zwischen dem Raum 17 und der Atmosphäre erfolgt über den oben beschriebenen Luftkanal 15 im Deckel 4 sowie über nicht gezeigte Ausnehmungen in der Gewindeverbindung 21 zwischen Deckel 4 und Einfüllstutzen 3.

Fig. 4 zeigt ein Dichtelement 25 eines ersten Ausführungsbeispiels eines erfindungsgemäßen Behälters im Längsschnitt. Dieses unterscheidet sich zum Dichtelement 5 des nicht beanspruchten Ausführungsbeispiels gemäß Fig. 2 in der Ausgestaltung des Trichters, so dass lediglich in der nachfolgenden Beschreibung darauf eingegangen wird. Gleiche Teile der Dichtelemente 5,25 werden mit gleichen Bezugszeichen versehen und werden nicht wiederholt beschrieben.

Wie aus Fig. 4 ersichtlich ist, ist der radial nach innen gerichtete Vorsprung 11 zur Befestigung des Dichtelementes 25 am Deckel 4 an einem zweiten Ende 27 des Trichters 26 vorgesehen, da die in Fig. 2 gezeigte Wandung 10 in diesem Ausführungsbeispiel als Teil des Trichters 26 ausgebildet ist. Dadurch kann ein großer Öffnungswinkel α des Trichters 26 vorgesehen werden und das Dichtelement 25 kann sehr flach ausgestaltet werden.

Um das Herausdringen des Druckmittels aus der Kammer 2 weiter zu erschweren, ist an einer Außenseite 28 des Trichters 26 eine axial in Richtung Kammer 2 gerichteter, umlaufender Vorsprung 29 vorgesehen, welcher das erste Ende 20 des Trichters 26 umgibt und den Trichter 26 überragt.

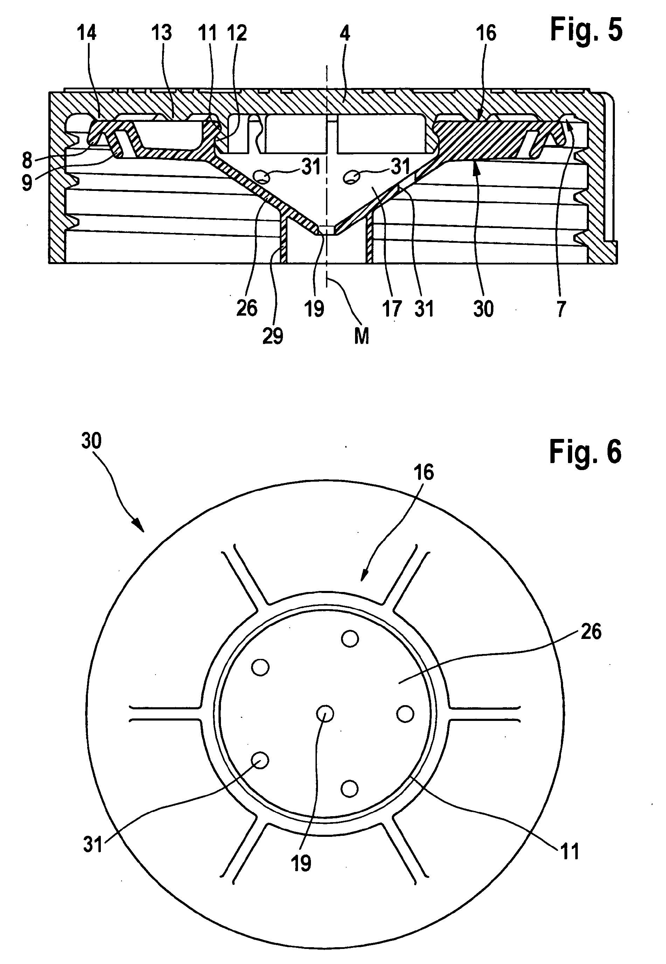

Fig. 5 zeigt einen Ausschnitt eines zweiten Ausführungsbeispiels eines erfindungsgemäßen Behälters 1 im Längsschnitt. Das Dichtelement 30 dieses Ausführungsbeispiels unterscheidet sich nur geringfügig zum Dichtelement 25 des ersten Ausführungsbeispiels gemäß Fig. 4. Zur Verbesserung der Be- und Entlüftung des Behälters 1 bei extremen Schräglagen des Fahrzeuges, weist das Dichtelement 30 im Bereich des Trichters 26 weitere Öffnungen 31 auf, welche außerhalb des axialen Vorsprunges 29 vorgesehen und gleichmäßig verteilt am Umfang des Trichters 26 angeordnet sind. Dies geht insbesondere aus Fig. 6 hervor, welche eine Draufsicht auf die Oberseite 16 des Dichtelementes 30 zeigt. Durch die zusätzlichen Öffnungen 31 ist sichergestellt, dass selbst bei extremen Schräglagen des Behälters 1 der Luftaustausch stets über eine der Öffnungen 31 des Dichtelementes 30 erfolgen kann.

### Bezugszeichenliste

- 1: Behälter
- 2: Kammer
- 3: Einfüllstutzen
- 4: Deckel
- 5: Dichtelement
- 6: Rand
- 7: Innenseite
- 8: Dichtlippe
- 9: Dichtlippe
- 10: Wandung
- 11: Vorsprung
- 12: Vorsprung
- 13: Vorsprung
- 14: Vorsprung
- 15: Luftkanal
- 16: Oberseite
- 17: Raum
- 18: Trichter
- 19: Öffnung
- 20: Ende
- 21: Gewindeverbindung

- 25: Dichtelement
- 26: Trichter
- 27: Ende
- 28: Außenseite
- 29: Vorsprung
- 30: Dichtelement
- 31: Öffnung

- 70: Bremsanlage
- 71: Bremskraftverstärker
- 72: Hauptzylinder
- 73: Druckmittelvorratsbehälter
- 74: Bremsleitung
- 75: Bremsleitung
- 76: Radbremse
- 77: Radbremse
- 78: Radbremse
- 79: Radbremse.
- 80: Drucksensor
- 81: Trennventil
- 82: Trennventil
- 83: Einlaßventil
- 84: Einlaßventil
- 85: Einlaßventil
- 86: Einlaßventil
- 87: Auslaßventil
- 88: Auslaßventil
- 89: Auslaßventil
- 90: Auslaßventil
- 91: Rücklaufleitung
- 92: Rücklaufleitung
- 93: Niederdruckspeicher
- 94: Niederdruckspeicher
- 95: Druckmittelfördervorrichtung
- 96: Druckmittelfördervorrichtung
- 97: Druckkanal
- 98: Druckkanal
- 99: Abzweig
- 100: Abzweig
- 101: Umschaltventil
- 102: Umschaltventil

- M: Mittelachse
- α: Öffnungswinkel

## Patentansprüche

1. Behälter (1), insbesondere Druckmittelbehälter für hydraulische Kraftfahrzeugbremsanlagen, mit mindestens einer Kammer (2), welche über einen Einfüllstutzen (3) mit einem flüssigen Medium befüllbar ist, und einem Deckel (4), welcher an dem Einfüllstutzen (3) befestigbar ist und Mittel zum Druckausgleich zwischen der Kammer (2) und der Atmosphäre aufweist, wobei ein Dichtelement (25;30) gegen Herausdringen des flüssigen Mediums aus der Kammer (2) vorgesehen ist, wobei das Dichtelement (25;30) einen mit der Atmosphäre verbundenen Raum (17) aufweist, welcher eine oder mehrere der Kammer (2) zugewandte Öffnungen (19) aufweist, wobei der Raum (17) derart ausgestaltet ist, dass in den Raum (17) eindringendes flüssiges Medium bei Verschiebung mittels eines weiteren, gasförmigen Mediums unter Beibehaltung des Volumens eine Vergrößerung der Oberfläche erfährt und das flüssige Medium bei Erreichen einer Grenzoberflächenspannung in die Kammer (2) zurückgedrängt wird, so dass das gasförmige Medium über das Dichtelement (25;30) in die Atmosphäre strömen kann, und wobei der Raum (17) die Form eines Trichters (18;26) aufweist, dessen erstes, verengtes Ende (20) sich in Richtung Kammer (2) erstreckt, an welchem die Öffnungen (19) vorgesehen sind, **dadurch gekennzeichnet, dass** das Dichtelement (25;30) an einer Außenseite (28) des Trichters (26) einen axial in Richtung Kammer gerichteten, umlaufenden Vorsprung (29) aufweist, welcher das erste mit einer Öffnung (19) versehene Ende (20) des Trichters (26) umgibt und den Trichter (26) überragt.

2. Behälter (1) nach Anspruch 1 , **dadurch gekennzeichnet, dass** das Dichtelement (25;30) einen radial nach innen gerichteten Vorsprung (11) aufweist, mittels welchem das Dichtelement (25;30) an dem Deckel (4) befestigbar ist.

3. Behälter (1) nach Anspruch 2, **dadurch gekennzeichnet, dass** der radial nach innen gerichtete Vorsprung (11) des Dichtelementes (25;30) an einem zweiten Ende (27) des Trichters (26) vorgesehen ist.

4. Behälter (1) nach Anspruch 1, **dadurch gekennzeichnet, dass** das Dichtelement (30) im Bereich des Trichters (26) weitere Öffnungen (31) aufweist, welche außerhalb des axialen Vorsprunges (29) vorgesehen und gleichmäßig verteilt am Umfang des Trichters (26) angeordnet sind.

5. Behälter (1) nach einem der vorangegangenen Ansprüche 1 bis 4, **dadurch gekennzeichnet, dass** an das Dichtelement (25;30) eine oder mehrere konzentrisch umlaufende Dichtlippen (8,9) zur Abdichtung des Einfüllstutzens (3) angeformt sind.

6. Verfahren zur Be- und Entlüftung eines Behälters (1) umfassend einen Deckel (4) und ein Dichtelement (25;30), nach einem der Ansprüche 1 bis 6, wobei der Behälter (1) in wenigstens einer Kammer (2) ein flüssiges Medium bevorratet, **dadurch gekennzeichnet, dass** das Medium, welches in das Dichtelement (25;30) eindringt, durch ein weiteres, gasförmiges Medium verschoben wird, und dass sich bei Verschiebung des flüssigen Mediums unter Beibehaltung des Volumens die Oberfläche des Mediums vergrößert, wobei das Medium bei Erreichen einer Grenzoberflächenspannung in die Kammer (2) zurückgedrängt wird und das gasförmige Medium über das Dichtelement (25;30) in die Atmosphäre strömen kann.

## Claims

1. Container (1), in particular pressure medium container for hydraulic motor vehicle braking systems, with at least one chamber (2) which can be filled with a liquid medium via a filler neck (3), and with a cover (4) which can be fastened to the filler neck (3) and has means for equalizing the pressure between the chamber (2) and the atmosphere, wherein a sealing element (25; 30) is provided to prevent the liquid medium from emerging from the chamber (2), wherein the sealing element (25; 30) has a space (17) which is connected to the atmosphere and has one or more openings (19) facing the chamber (2), the space (17) being configured in such a manner that liquid medium penetrating the space (17) undergoes an increase in the surface, while the volume is retained, when displaced by means of a further gaseous medium, and, when a threshold surface tension is reached, the liquid medium is forced back into the chamber (2) such that the gaseous medium can flow into the atmosphere via the sealing element (25; 30), and wherein the space (17) is in the form of a funnel (18; 26), the first, narrowed end (20) of which, at which the openings (19) are provided, extends in the direction of the chamber (2), **characterized in that**, on an outer side (28) of the funnel (26), the sealing element (25; 30) has a peripheral projection (29) which is directed axially towards the chamber, surrounds the first end (20), provided with an opening (19), of the funnel (26) and projects over the funnel (26).

2. Container (1) according to Claim 1, **characterized in that** the sealing element (25; 30) has a radially inwardly directed projection (11) by means of which the sealing element (25; 30) can be fastened to the cover (4).

3. Container (1) according to Claim 2, **characterized in that** the radially inwardly directed projection (11) of the sealing element (25; 30) is provided at a second end (27) of the funnel (26).

4. Container (1) according to Claim 1, **characterized in that**, in the region of the funnel (26), the sealing element (30) has further openings (31) which are provided outside the axial projection (29) and are distributed uniformly over the circumference of the funnel (26).

5. Container (1) according to one of the preceding Claims 1 to 4, **characterized in that** one or more concentrically encircling sealing lips (8, 9) for sealing the filler neck (3) are integrally formed on the sealing element (25; 30).

6. Method for ventilating and aerating a container (1) comprising a cover (4) and a sealing element (25; 30), according to one of Claims 1 to 5, wherein the container (1) stores a liquid medium in at least one chamber (2), **characterized in that** the medium which penetrates the sealing element (25; 30) is displaced by a further gaseous medium, and **in that** the surface of the medium is increased, with the volume being retained, when the liquid medium is displaced, with, when a threshold surface tension is reached, the medium being forced back into the chamber (2) and the gaseous medium being able to flow into the atmosphere via the sealing element (25; 30).

## Revendications

1. Récipient (1), en particulier récipient pour milieu sous pression pour installations de freinage hydrauliques de véhicules automobiles, comprenant au moins une chambre (2) qui peut être remplie d'un milieu fluide par le biais d'une tubulure de remplissage (3), et un couvercle (4), qui peut être fixé sur la tubulure de remplissage (3) et qui présente des moyens de compensation de la pression entre la chambre (2) et l'atmosphère, un élément d'étanchéité (25 ; 30) étant prévu pour empêcher que du milieu fluide ne ressorte de la chambre (2), l'élément d'étanchéité (25 ; 30) présentant un espace (17) connecté à l'atmosphère, qui présente une ou plusieurs ouvertures (19) tournées vers la chambre (2), l'espace (17) étant configuré de telle sorte que du milieu fluide entrant dans l'espace (17), lors d'un déplacement au moyen d'un autre milieu gazeux, subisse une augmentation de surface en conservant le volume, et le milieu fluide, une fois qu'une tension de surface limite a été atteinte, est refoulé dans la chambre (2), de sorte que le milieu gazeux puisse s'écouler par le biais de l'élément d'étanchéité (25 ; 30) dans l'atmosphère, et l'espace (17) présentant la forme d'un entonnoir (18 ; 26), dont la première extrémité rétrécie (20) s'étend dans la direction de la chambre (2), au niveau de laquelle sont prévues les ouvertures (19), **caractérisé en ce que** l'élément d'étanchéité (25 ; 30) présente, sur un côté extérieur (28) de l'entonnoir (26), une saillie (29) périphérique, orientée axialement dans la direction de la chambre, qui entoure la première extrémité (20) de l'entonnoir (26) pourvue d'une ouverture (19) et dépasse au-delà de l'entonnoir (26).

2. Récipient (1) selon la revendication 1, **caractérisé en ce que** l'élément d'étanchéité (25 ; 30) présente une saillie (11) orientée radialement vers l'intérieur, au moyen de laquelle l'élément d'étanchéité (25 ; 30) peut être fixé sur le couvercle (4).

3. Récipient (1) selon la revendication 2, **caractérisé en ce que** la saillie (11) orientée radialement vers l'intérieur de l'élément d'étanchéité (25 ; 30) est prévue sur une deuxième extrémité (27) de l'entonnoir (26).

4. Récipient (1) selon la revendication 1, **caractérisé en ce que** l'élément d'étanchéité (30) présente, dans la région de l'entonnoir (26), d'autres ouvertures (31), qui sont prévues en dehors de la saillie axiale (29) et qui sont disposées de manière répartie uniformément sur la périphérie de l'entonnoir (26).

5. Récipient (1) selon l'une quelconque des revendications précédentes 1 à 4, **caractérisé en ce qu'**une ou plusieurs lèvres d'étanchéité (8, 9) périphériques concentriques sont façonnées sur l'élément d'étanchéité (25 ; 30) pour réaliser l'étanchéité de la tubulure de remplissage (3).

6. Procédé pour ventiler et désaérer un récipient (1) comprenant un couvercle (4) et un élément d'étanchéité (25 ; 30), selon l'une quelconque des revendications 1 à 6, dans lequel le récipient (1) stocke un milieu fluide dans au moins une chambre (2), **caractérisé en ce que** le milieu, qui pénètre dans l'élément d'étanchéité (25 ; 30), est déplacé par un autre milieu gazeux, et **en ce que** lors du déplacement du milieu fluide en conservant le volume, la surface du milieu augmente, le milieu étant refoulé dans la chambre (2) une fois qu'une tension de surface limite a été atteinte, et le milieu gazeux peut s'écouler dans l'atmosphère par le biais de l'élément d'étanchéité (25 ; 30).
